# FASCICULE DE BREVET EUROPEEN

(11) **EP 2 156 209 B1**
(45) Date de publication et mention de la délivrance du brevet: **30.03.2011**
(21) Numéro de dépôt: 08760736.2
(22) Date de dépôt: 09.06.2008
(51) Int. Cl.: G01S 1/48

(54) **PROCÉDÉ ET DISPOSITIF DE DÉTERMINATION DE L' ANGLE DE RELÈVEMENT DANS UN SYSTÈME DE RADIONAVIGATION DE TYPE TACAN**
VERFAHREN UND EINRICHTUNG ZUR BESTIMMUNG DES PEILWINKELS IN EINEM FUNKNAVIGATIONSSYSTEM DES TACAN-TYPS
METHOD AND DEVICE FOR DETERMINING THE ANGLE OF BEARING IN A TACAN TYPE RADIONAVIGATION SYSTEM

(30) Priorité: 08.06.2007 FR 0704114
(43) Date de publication de la demande: 24.02.2010
(73) Titulaire: THALES, 92200 Neuilly-sur-Seine (FR)
(72) Inventeur: COLLE, Julien, 53000 Laval (FR)
(74) Mandataire: Dudouit, Isabelle
(86) Numéro de dépôt international: PCT/EP2008/057172
(87) Numéro de publication internationale: WO 2008/155252

(56) Documents cités:
- EP-A- 1 217 613
- FR-A- 2 687 224
- US-A- 3 950 753
- MACIEJ NIEDZWIECKI ET AL: 'Smart Copying-A New Approach to Reconstruction of Audio Signals' IEEE TRANSACTIONS ON SIGNAL PROCESSING, IEEE SERVICE CENTER, NEW YORK, NY, US vol. 49, no. 10, Octobre 2001, XP011059432 ISSN: 1053-587X
- WELT S: "Design of a nonlinear TACAN bearing tracking servo using the extended Kalman filter" IEEE, 7 décembre 1988 (1988-12-07), pages 736-741, XP010071208

## Description

La présente invention concerne un procédé et un système permettant de déterminer un angle de relèvement constitué, par exemple, par l'azimut d'un émetteur tournant ou balise rotative, cet angle étant déterminé au moyen du signal fourni par l'émetteur tournant, avec une précision sur la mesure de l'ordre de 0.5° en fonctionnement.

Le signal émis par l'émetteur est un signal modulé sur lequel on porte une sinusoïde. Les pulses émis par l'émetteur ou antenne d'émission sont sensiblement égaux.

La valeur fixée pour la précision de mesure est fonction de l'application : +/-3 ° en 15Hz seul, +/-1 ° en 15Hz + 135Hz, par exemple.

L'art antérieur décrit dans le brevet du demandeur FR 2 687 224 divulgue un procédé utilisant les paires d'impulsion d'un signal de relèvement TACAN fourni par un radiophare TACAN, pour déterminer l'enveloppe de ce signal et en déduire l'angle de relèvement, c'est-à-dire l'azimut du radiophare. Dans ce document, le procédé met en oeuvre des corrélations associées à des calculs trigonométriques, et détermine l'enveloppe du signal par cycles de un quinzième de seconde, au moyen d'impulsions fictives régulièrement réparties et dont l'amplitude est, au moins en l'absence d'effacement, dans le signal de relèvement, la moyenne des amplitudes des deux paires d'impulsions du signal de relèvement situées au plus près et de part et d'autre de l'impulsion fictive considérée et à une distance maximale donnée de l'impulsion fictive considérée.

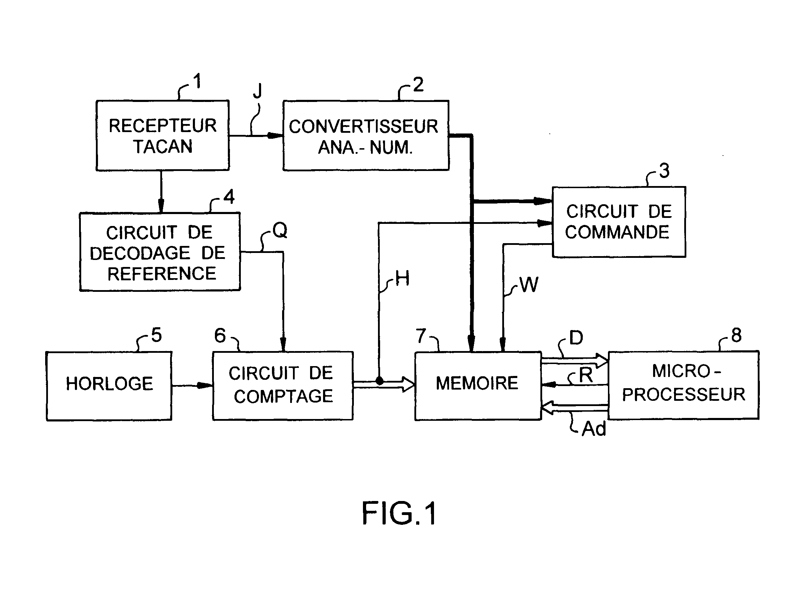

La figure 1 représente un procédé selon l'art antérieur décrit dans le brevet précité. Cette figure montre un récepteur TACAN 1, qui capte le signal émis par un radiophare TACAN. Ce signal est constitué de paires d'impulsions dont certaines sont groupées et présentent un codage prédéterminé afin de constituer le signal de référence principale qui est émis lors du passage plein Est de la dent d'amplitude maximale du diagramme de rayonnement du radiophare.

Le récepteur 1 délivre à un convertisseur analogique-numérique 2, un signal J. Ce signal est fait, pour chaque paire de signaux, d'une seule impulsion dont l'amplitude est égale à l'amplitude crête de la première impulsion de chaque paire ; pour simplifier le langage, il sera dit ci-après que le récepteur délivre des paires d'impulsions au convertisseur 2. Les signaux de sortie du convertisseur 2 sont fournis à un circuit de commande 3 et à une mémoire, 7 à double accès, par exemple. Le récepteur 1 possède un circuit de décodage de la référence principale qui, pour faciliter les explications, a été représenté sur la figure 1 par un bloc 4 extérieur au récepteur 1. Le circuit de décodage fournit un signal Q constitué par une impulsion qui indique l'apparition du signal de référence dans le signal capté.

Le procédé met en oeuvre un échantillonnage avec une mise en mémoire correspondant à des échantillons obtenus par cycles de un quinzième de seconde, c'est-à-dire sur une période de la composante à 15 Hz du signal TACAN. Par souci de simplicité, il y a intérêt à avoir un nombre entier de fenêtres d'échantillonnage non seulement pendant la période de la composante à 15 Hz, mais aussi pendant la période de la composante à 135 Hz.

Dans la réalisation décrite à l'aide de la figure 1, le nombre de fenêtres d'échantillonnage pendant un quinzième de seconde est de 288, ce qui fait 32 fenêtres pendant une période de la composante à 135 Hz. Ces fenêtres sont élaborées à l'aide d'une horloge, 5, de fréquence égale à 4320 Hz qui alimente un circuit de comptage, 6, qui compte de 0 à 287 et repart de 0.

Le circuit de comptage est remis à 0 par l'impulsion que délivre le circuit de décodage 4 lors de l'apparition du signal de référence principal. Le circuit de comptage 6 fournit au circuit de commande 3 un signal en créneaux qui prend alternativement, les valeurs 0 et 1 pendant un temps égal à (1/288).(1/15) seconde, en commençant par la valeur 0 au moment t=0 où apparaît le signal de référence principale. Le circuit de comptage fournit également, en synchronisme avec le signal de référence principale, les adresses d'écriture dans les 288 positions de la mémoire 7, définissant ainsi 288 fenêtres d'échantillonnage : une à chaque nouvel état 0 ou 1 du signal de référence principale.

Le traitement direct des impulsions selon l'art antérieur, pour déterminer l'enveloppe de ces impulsions, conduit à des calculs très importants.

Pour éviter cela, il est proposé de déterminer cette enveloppe au moyen d'impulsions fictives régulièrement réparties et dont l'amplitude est la moyenne des amplitudes des deux impulsions du signal TACAN situées au plus près de l'impulsion fictive considérée, de part et d'autre de cette impulsion fictive considérée.

Toutefois, le temps entre les impulsions reçues peut atteindre 2,5ms alors que la précision doit maintenant atteindre 150 µs. Sachant que la variation en fonctionnement peut atteindre 20°/s, les mesures données avec cette méthode ne sont pas dans la tolérance de 0,5° souhaitée dans la plupart des applications.

Le procédé selon l'invention repose, notamment, sur l'utilisation d'un module de reconstitution de la période t d'un signal à un instant donné à l'aide du signal correspondant à la période passée (t-1). Par exemple, dans le cas d'un signal de type sinusoïdal, le module permet de remplacer les paliers d'une période, par des branches de sinusoïde de fréquence F₁ et de sinusoïde de fréquence F₂, provenant des sorties respectivement d'un filtre correspondant à la fréquence F₁ et d'un filtre correspondant à la fréquence F₂ à la période t-1.

Les paliers ont une largeur T qui varie, par exemple de 60µs à 2,5ms. Leur période correspond à t de valeur égale à 15Hz pour F₁ et 135 Hz pour F₂ du signal et de la période t-1 du signal retardé, dans le cas d'une application TACAN.

L'objet de l'invention concerne un procédé permettant de reconstituer un premier signal se présentant sous la forme d'une suite d'impulsions de largeur T, caractérisé en ce que ledit premier signal est issu d'une balise tournante et se présente sous la forme d'un signal sinusoïdal,
- ledit premier signal à reconstituer est filtré dans un premier filtre à une fréquence F₁ et dans un deuxième filtre à une fréquence F₂, le signal SF₁ issu du premier filtre et le signal SF₂ issu du deuxième filtre sont transmis à un sommateur puis à un dispositif introduisant une valeur de retard τ, et en ce que
- l'on substitue un ou plusieurs paliers de largeur T dudit premier signal à reconstituer par un deuxième signal sinusoïdal et retardé en ajoutant le retard τ audit premier signal, par des portions de sinusoïde du deuxième signal sinusoïdal retardé correspondant à un instant t-1 afin de reconstituer un signal ayant une forme sinusoïdale.

Le signal reconstitué de fréquence F₁ et le signal reconstitué de fréquence F₂ sont, par exemple, transmis à un dispositif recevant une référence et permettant de calculer les angles de relèvement aux fréquences F₁ et F₂.

Les fréquences F₁ et F₂ peuvent être égales respectivement à 15 Hz et 135 Hz.

L'invention concerne aussi un dispositif permettant de reconstituer l'enveloppe d'un premier signal se présentant sous une forme sinusoïdale et issu d'une balise tournante caractérisé en ce qu'il comporte au moins les éléments suivants :un détecteur d'impulsions relié à un dispositif de décodage à l'issu duquel un premier signal se présente sous la forme de « paliers » de largeur temporelle T, un dispositif de reconstitution du présent à l'aide du passé comprenant au moins un filtre passe bas à une première fréquence F₁ et un filtre passe bande à une deuxième fréquence F₂, un dispositif ajoutant un retard τ d'une valeur donnée au signal issu du filtre se présentant sous la forme d'une sinusoïde, le dispositif de reconstitution du présent à l'aide du passé substituant à un ou plusieurs paliers dudit premier signal à reconstituer reçu à un instant t, une portion de sinusoïde du signal retardé du retard τ de type sinusoïdal, la portion de sinusoïde de remplacement ayant une durée temporelle sensiblement égale à la valeur T du palier remplacé.

Le dispositif peut comporter deux filtres, respectivement un filtre passe bas à une première fréquence F₁ et un filtre passe bande à une deuxième fréquence F₂, un premier dispositif de calcul de la valeur moyenne VmF₁ du signal issu du premier filtre passe bas et un deuxième dispositif de calcul de la valeur moyenne VmF₂ du deuxième signal issu du filtre passe bande, un premier et un deuxième dispositif de détection de point d'inflexion (VF₁, VF₂) recevant les valeurs moyennes des deux signaux reconstitués et un dispositif de calcul de l'angle de relèvement à partir des deux signaux reconstitués et des références issues d'un oscillateur numérique à accumulation, l'oscillateur numérique étant basé sur un principe d'asservissement des références internes du dispositif sur des références externes.

Le dispositif de détection est un détecteur d'impulsions TACAN relié à un dispositif de décodage paires et à un dispositif de décodage des références et en ce que le premier filtre est un filtre passe base à 15 Hz et le deuxième filtre est un filtre passe bande de fréquence 135 Hz.

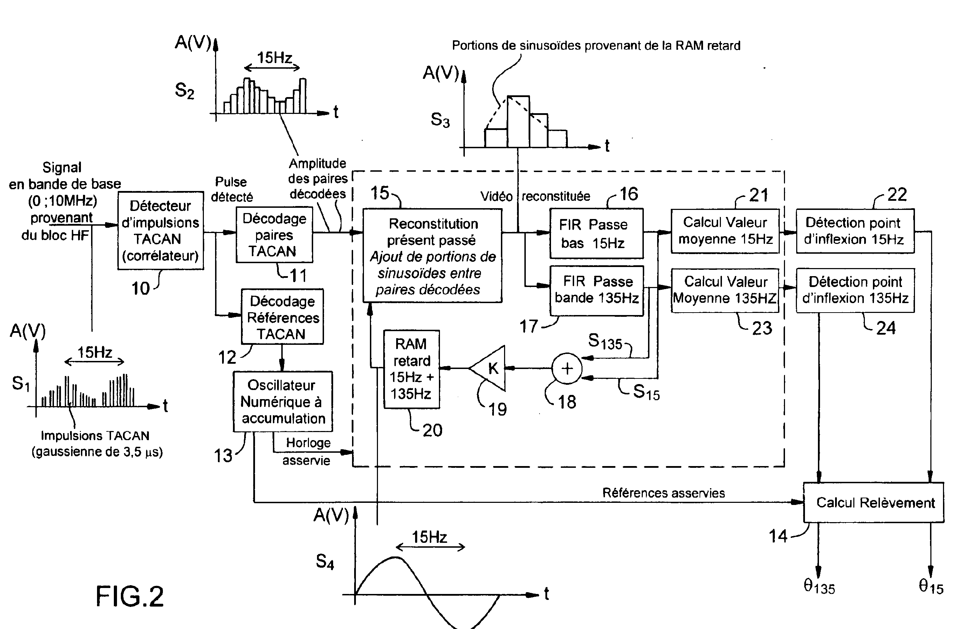

D'autres caractéristiques et avantages de la présente invention apparaîtront mieux à la lecture de la description qui suit donnée à titre illustratif et nullement limitatif annexée des figures qui représentent :
o La figure 1 un schéma d'architecture selon l'art antérieur,
o La figure 2 un schéma illustrant le fonctionnement général du système de détermination de l'angle de relèvement en utilisant le procédé selon l'invention.

Afin de mieux faire comprendre le principe mis en oeuvre dans la présente demande de brevet, le procédé et le dispositif selon l'invention sont décrits à titre illustratif pour un système TACAN, tel que représenté à la figure 2, sur laquelle on a schématisé les signaux à différents endroits du système, pour la fréquence de 15 Hz, sachant que la forme du signal pour la fréquence 135 Hz est sensiblement identique.

Pour rappel, le système TACAN a trois fonctions principales :
1 - une fonction indicatif morse,
2 - une fonction distance oblique,
3 - une fonction relèvement angulaire magnétiquement.

L'objet de l'invention concerne la fonction relèvement angulaire et la précision de la mesure associée. La fonction relèvement a pour but de mesurer une différence temporelle permettant d'obtenir la différence de phase entre deux signaux émis par la balise à antenne rotative. L'un de ces signaux S_{ref} sert de référence et est transmis par modulation de position d'impulsions. L'autre signal Sᵥₐᵣ est variable et est transmis par modulation d'amplitude ; sa phase dépend du relèvement du porteur mobile ou avion par rapport à la balise.

La mesure de différence (temporelle) ou différence de phase se fait entre le signal de référence S_{ref} et le point de demi-amplitude à pente positive de l'enveloppe de modulation. L'enveloppe de modulation est constituée par les impulsions transmises par la balise, S₁. Le point critique pour la précision en relèvement (correspondant à un jitter inférieur à +/-0,5°, par exemple) est le déphasage sur l'enveloppe globale de modulation.

L'objectif de la présente invention est de reconstituer l'enveloppe discrétisée reçue afin d'obtenir l'image de l'enveloppe réelle transmise par la balise, ceci afin de déterminer le point d'inflexion de la sinusoïde avec un maximum de précision.

Cette enveloppe est habituellement obtenue par décodage des paires TACAN (2700/sec dans l'exemple correspondant aux données précitées) émises par la balise. L'enveloppe globale est constituée de deux fréquences de modulation (15 Hz et 135 Hz). Un filtre passe bas et un filtre passe bande vont permettre de séparer ces deux enveloppes.

Chaque filtre (passe bas ou passe bande) reçoit en entrée une succession de paliers (2700/sec) qui s'inscrivent dans les sinusoïdes 15 Hz et 135 Hz de la modulation TACAN. Ces paliers induisent un déphasage sur l'enveloppe reconstituée en sortie du filtre. Le déphasage est égal à l'écart maximal entre deux paires d'impulsions émises par la balise et se traduit par une oscillation connue sous le terme anglo-saxon jitter sur la mesure de l'angle de relèvement. L'écart maximal entre deux paires pouvant être de 2, 5 ms ce qui équivaut à une imprécision de 13,4 °.

Sur la figure 2, l'exemple de dispositif selon l'invention comporte, un détecteur d'impulsions TACAN 10. Un pulse détecté est transmis d'une part à un dispositif de décodage des paires TACAN 11, et à un dispositif de décodage des références TACAN 12. Les références TACAN sont transmises à un oscillateur numérique à accumulation 13 ayant notamment pour fonction de transmettre les références asservies à un dispositif de calcul du relèvement 14 ou angle de relèvement. L'oscillateur numérique à accumulation 13 fournit l'horloge permettant d'asservir l'ensemble du système. C'est lui qui va fournir le signal de référence permettant d'effectuer le calcul de relèvement.

La détection 10 des pulses TACAN transmis par la balise suivie du décodage des paires 11 (constituées par ces pulses) permettent d'obtenir une discrétisation des enveloppes 15 Hz et 135 Hz de la balise, signal S₂ sur le schéma.

L'amplitude des paires décodées issue du décodage des paires TACAN est transmise à un dispositif 15 dit de « reconstitution du présent à l'aide du passé », ayant notamment pour fonction de substituer des paliers par des portions de sinusoïdes entre paires décodées, les portions de sinusoïde correspondant à un signal retardé en mettant en oeuvre le procédé selon l'invention décrit ci-après. Le dispositif 15 fournit un signal reconstitué schématisé par le signal S₃. Le signal reconstitué est transmis d'une part à un filtre passe bas à 15 Hz, 16, et à un filtre passe bande à 135 Hz, 17.

Le signal S₁₅ filtré à 15 Hz est transmis d'une part à un dispositif 21 permettant de calculer la valeur moyenne VmF₁, puis à un dispositif 22 adapté à détecter le point d'inflexion à 15 Hz, VF₁₅

Le signal S₁₃₅ filtré à 135 Hz est transmis d'une part à un dispositif 23 permettant de calculer la valeur moyenne VmF₂, puis à un dispositif 24 adapté à détecter le point d'inflexion à 135 Hz, VF₁₃₅.

Les deux valeurs des points d'inflexion sont ensuite utilisées par le dispositif de calcul de relèvement recevant les références asservies, pour déterminer l'angle de relèvement, respectivement pour les angles θ₁₅ (pour la fréquence 15 Hz l'angle peut varier entre 0 et 360 ° et θ₁₃₅ (dans le cas de la fréquence 135 Hz, l'angle de relèvement peut varier entre 0 et 40°), selon une méthode connue de l'Homme du métier pour ce qui concerne la mesure du temps) entre le point d'inflexion 15 Hz et la référence du train de références ou en anglo-saxon MRB (main référence burst) asservie, et la mesure du temps entre le point d'inflexion 135 Hz et la référence MRB asservie.

Le signal filtré à 15 Hz est aussi transmis vers un sommateur 8 qui reçoit aussi le signal filtré à 135 Hz. La somme des signaux S₁₅ et S₁₃₅ est transmise à un amplificateur 9 avant d'être envoyée dans une mémoire RAM 10 qui a notamment pour fonction d'introduire un retard temporel τ au niveau du signal (ce retard correspond notamment au temps de traitement des filtres). Le signal S₂ retardé correspond aux portions de sinusoïde qui sont ajoutées au signal issu du décodage paires TACAN pour «se substituer au palier T entre paires décodées » afin de produire le signal reconstitué utilisé pour le calcul de l'angle de relèvement.

Le procédé selon l'invention repose, notamment, sur l'utilisation du module de reconstitution du présent à l'aide du passé 15 permettant de remplacer les paliers à une période t, par des branches de sinusoïde 15 Hz et de sinusoïde 135 Hz provenant des sorties respectivement du filtre passe-bas et du filtre passe-bas correspondant à la période t-1 (ayant donc subit un retard τ). La partie du signal correspondant à la période t-1 est injectée en entrée des deux filtres, elle est associée aux échantillons du signal correspondant à la période t. Ainsi, le déphasage maximal est égal au déphasage induit par la vitesse angulaire de l'aéronef par rapport à la balise, ce dernier étant négligeable par rapport à l'écart maximum entre 2 paires émises par la balise.

Pour une période t, le signal issu du dispositif de décodage de paires TACAN comprenant un signal à 15 Hz et un signal à 135 Hz est transmis au dispositif appelé « dispositif de reconstitution du présent ». Les portions de sinusoïdes ajoutées sont obtenues en ajoutant les signaux issus des filtres passe-bas et passe-bande qui se trouvent à des fréquences respectivement de 15 Hz et 135 Hz. Le signal ainsi constitué est, par exemple, amplifié dans l'amplificateur 19 de gain K avant de passer à travers la mémoire à retard 20 qui permet d'ajouter un retard temporel τ dont la valeur correspond, par exemple, aux retards résultant du passage des signaux dans les équipements présents, notamment le retard induit par les filtres Ainsi, le signal issu de ce dispositif de retard se présente sous la forme d'une sinusoïde ayant des composantes fréquentielles de 15 et 135 Hz, pour une période t-1.

La valeur du retard est déterminée, par exemple, en tenant compte de la valeur 15 Hz pour la sinusoïde 15 Hz et 135 Hz pour la sinusoïde 135 Hz et du temps total engendré par la chaîne de traitement et des filtres.

La valeur du gain K de l'amplificateur de gain 19 est, par exemple, inférieure à 1.

La sortie du filtre passe-bas, 15 Hz, correspond donc à un signal ayant une forme de sinusoïde qui est transmis au dispositif 21 permettant de calculer sa valeur moyenne, avant de détecter le point d'inflexion 22 correspondant à la sinusoïde de fréquence 15 Hz.

La sortie du filtre passe-haut, 135 Hz, correspond donc à un signal ayant une forme de sinusoïde qui est transmis au dispositif 23 permettant de calculer sa valeur moyenne, avant de détecter le point d'inflexion 24 correspondant à la sinusoïde de fréquence 135 Hz.

L'ensemble du dispositif de reconstitution du présent à partir du passé et du dispositif de calcul de relèvement est asservi par une horloge. Le choix de la valeur de la fréquence d'horloge de discrétisation du signal est effectué par exemple de la manière suivante : les sorties spécifiées par les clauses techniques d'une application donnée sont caractérisées par exemple, par un mot de relèvement 12 bits avec comme bit le plus significatif à 180°, ce qui entraîne un compteur binaire dont le rapport de division est 2exp(12)=4096. Etant donné que, pour l'exemple donné, la période de mesure est de 1/15 sec, la fréquence de référence devra être un multiple de 4096*15=61440 Hz.

Une balise émet le train de références principales à une fréquence de 15 Hz. Or ce 15 Hz est fourni par l'oscillateur local propre à la balise. Afin d'augmenter la précision de la mesure, l'interrogateur ralliant la balise doit s'asservir sur le 15 Hz émis par la balise à l'aide des train de références principales reçus. Un oscillateur à accumulation est utilisé, par exemple, afin d'asservir le 15 Hz interne au 15 Hz de la balise. Ce système fournit une horloge asservie à 61440 Hz sur le 15 Hz de la balise.

Les valeurs V₁₅ et V₁₃₅ des points d'inflexion obtenus sont ensuite transmis au dispositif de calcul de relèvement 14 qui reçoit aussi les références asservies. Le dispositif de calcul de relèvement exécute des étapes connues de l'Homme du métier pour mesurer le temps entre les 2 signaux et ensuite les angles de relèvement θ₁₅ et θ₁₃₅ correspondant aux fréquences 15 Hz et 135 Hz.

## Revendications

1. Procédé permettant de reconstituer un premier signal se présentant sous la forme d'une suite d'impulsions de largeur T, **caractérisé en ce que** ledit premier signal est issu d'une balise tournante et se présente sous la forme d'un signal sinusoïdal,
• ledit premier signal à reconstituer est filtré dans un premier filtre (16) à une fréquence F₁ et dans un deuxième filtre (17) à une fréquence F₂, le signal SF₁ issu du premier filtre (16) et le signal SF₂ issu du deuxième filtre (17) sont transmis à un sommateur (18) puis à un dispositif (20) introduisant une valeur de retard τ, et **en ce que** :
• l'on substitue un ou plusieurs paliers de largeur T dudit premier signal à reconstituer par un deuxième signal sinusoïdal et retardé en ajoutant le retard τ audit premier signal, par des portions de sinusoïde du deuxième signal sinusoïdale retardé correspondant à un instant t-1 afin de reconstituer un signal ayant une forme sinusoïdale.

2. Procédé selon la revendication 1 **caractérisé en ce que** le signal reconstitué de fréquence F₁ et le signal reconstitué de fréquence F₂ sont transmis à un dispositif (14) recevant une référence et permettant de calculer les angles de relèvement aux fréquences F₁ et F₂.

3. Procédé selon la revendication 2 **caractérisé en ce que** les fréquences F₁ et F₂ sont égales respectivement à 15 Hz et 135 Hz.

4. Dispositif permettant de reconstituer l'enveloppe d'un premier signal se présentant sous une forme sinusoïdale et issu d'une balise tournante **caractérisé en ce qu'**il comporte au moins les éléments suivants :un détecteur d'impulsions (10) relié à un dispositif de décodage (11) à l'issu duquel un premier signal se présente sous la forme de « paliers » de largeur temporelle T, un dispositif de reconstitution du présent à l'aide du passé (15) comprenant au moins un filtre passe bas (16) à une première fréquence F₁ et un filtre passe bande (17) à une deuxième fréquence F₂, un dispositif (20) ajoutant un retard τ d'une valeur donnée au signal issu du filtre se présentant sous la forme d'une sinusoïde, le dispositif de reconstitution du présent à l'aide du passé (15) substituant à un ou plusieurs paliers dudit premier signal à reconstituer reçu à un instant t, une portion de sinusoïde du signal retardé du retard τ de type sinusoïdal, la portion de sinusoïde de remplacement ayant une durée temporelle sensiblement égale à la valeur T du palier remplacé.

5. Dispositif selon la revendication 4 **caractérisé en ce qu'**il comporte deux filtres, respectivement un filtre passe bas (16) à une première fréquence F₁ et un filtre passe bande (17) à une deuxième fréquence F₂, un premier dispositif (21) de calcul de la valeur moyenne VmF₁ du signal issu du premier filtre passe bas et un deuxième dispositif (23) de calcul de la valeur moyenne VmF₂ du deuxième signal issu du filtre passe bande, un premier (22) et un deuxième (24) dispositif de détection de point d'inflexion (VF₁, VF₂) recevant les valeurs moyennes des deux signaux reconstitués et un dispositif (14) de calcul de l'angle de relèvement à partir des deux signaux reconstitués et des références issues d'un oscillateur numérique à accumulation (13), l'oscillateur numérique étant basé sur un principe d'asservissement des références internes du dispositif sur des références externes.

6. Dispositif selon l'une des revendications 4 et 5 **caractérisé en ce que** le dispositif de détection est un détecteur d'impulsions TACAN relié à un dispositif de décodage paires et à un dispositif de décodage des références et **en ce que** le premier filtre est un filtre passe base à 15 Hz et le deuxième filtre est un filtre passe bande de fréquence 135 Hz.

## Claims

1. A process for reconstituting a first signal in the form of a series of pulses of width T, **characterised in that** said first signal originates from a rotating beacon and is in the form of a sinusoidal signal,
said first signal to be reconstituted is filtered in a first filter (16) at a frequency F₁ and in a second filter (17) at a frequency F₂, the signal SF₁ from the first filter (16) and the signal SF₂ from the second filter (17) are sent to an adder (18) and then to a device (20) introducing a delay value τ, and **in that**:
one or more steps of width T from said first signal to be reconstituted are substituted with a second sinusoidal signal and are delayed by adding the delay τ to said first signal, with sine wave portions of the second delayed sinusoidal signal corresponding to a time t-1 so as to reconstitute a signal of sinusoidal form.

2. The process according to claim 1, **characterised in that** the reconstituted signal of frequency F₁ and the reconstituted signal of frequency F₂ are sent to a device (14) receiving a reference and which allows calculation of the bearing angles at frequencies F₁ and F₂.

3. The process according to claim 2, **characterised in that** the frequencies F₁ and F₂ are equal to 15Hz and 135Hz respectively.

4. A device for reconstituting the envelope of a first signal of sinusoidal form and which originates from a rotating beacon, **characterised in that** it comprises at least the following elements: a pulse detector (10) connected to a decoding device (11) from which a first signal is presented in the form of "steps" of time width T, a device for reconstituting the present from the past (15) at least comprising a low pass filter (16) at a first frequency F₁, and a bandpass filter (17) at a second frequency F₂, a device (20) for adding a delay τ of a predetermined value to the signal originating from the filter in the form of a sine wave, the device for reconstituting the present from the past (15) substituting, at one or more steps of said first signal to be reconstituted received at time t, a sine wave portion of the signal delayed by the delay τ of sinusoidal type, the portion of replacement sine wave having a time duration substantially equal to the value T of the replaced step.

5. The device according to claim 4, **characterised in that** it comprises two filters, respectively a low pass filter (16) at a first frequency F₁ and a band pass filter (17) at a second frequency F₂, a first device (21) for calculating the mean value VmF₁ of the signal from the first low pass filter and a second device (23) for calculating the mean value VmF₂ of the second signal from the band pass filter, a first (22) and a second (24) device for detecting the inflection point (VF₁, VF₂) receiving the mean values of the two reconstituted signals and a device (14) for calculating the bearing angle from the two reconstituted signals and the references originating from a digital accumulation oscillator (13), the digital oscillator being based on a principle of coupling the internal references of the device with the external references.

6. The device according to claim 4 or 5, **characterised in that** the detection device is a TACAN pulse detector connected to a device for decoding pairs and a device for decoding references and **in that** the first filter is a low pass filter at 15Hz and the second filter is a band pass filter having a frequency of 135Hz.

## Patentansprüche

1. Verfahren zum Wiederherstellen eines ersten Signals in Form einer Reihe von Impulsen der Breite T, **dadurch gekennzeichnet, dass** das erste Signal von einem Drehfeuer stammt und die Form eines sinusförmigen Signals hat,
wobei das wiederherzustellende erste Signal in einem ersten Filter (16) mit einer Frequenz F₁ und in einem zweiten Filter (17) mit einer Frequenz F₂ gefiltert wird, das Signal SF₁ vom ersten Filter (16) und das Signal SF₂ vom zweiten Filter (17) zu einem Addierglied (18) und dann zu einer Vorrichtung (20) gesendet werden, die einen Verzögerungswert τ einführt, und **dadurch**, dass:
eine oder mehrere Stufen der Breite T des wiederherzustellenden ersten Signals durch ein zweites sinusförmiges Signal ersetzt und durch Hinzufügen der Verzögerung τ zu dem ersten Signal verzögert werden, wobei Sinuswellenteile des zweiten verzögerten sinusförmigen Signals einem Zeitpunkt t-1 entsprechen, um ein Signal mit Sinusform wiederherzustellen.

2. Verfahren nach Anspruch 1, **dadurch gekennzeichnet, dass** das wiederhergestellte Signal mit der Frequenz F₁ und das wiederhergestellte Signal mit der Frequenz F₂ zu einer Vorrichtung (14) gesendet werden, die eine Referenz erhält und die Berechnung der Peilwinkel auf den Frequenzen F₁ und F₂ zulässt.

3. Verfahren nach Anspruch 2, **dadurch gekennzeichnet, dass** die Frequenzen F₁ und F₂ jeweils gleich 15 Hz bzw. 135 Hz sind.

4. Vorrichtung zum Wiederherstellen der Hüllkurve eines ersten Signals in Sinusform, das von einem Drehfeuer stammt, **dadurch gekennzeichnet, dass** sie wenigstens die folgenden Elemente beinhaltet: einen Impulsdetektor (10), der mit einer Decodiervorrichtung (11) verbunden ist, von der ein erstes Signal in "Stufen"-Form mit der Zeitbreite T präsentiert wird, wobei eine Vorrichtung zum Wiederherstellen der Gegenwart mit Hilfe der Vergangenheit (15) wenigstens ein Tiefpassfilter (16) mit einer ersten Frequenz F₁ und ein Bandpassfilter (17) mit einer zweiten Frequenz F₂ umfasst, wobei eine Vorrichtung (20) eine Verzögerung τ eines vorbestimmten Wertes zu dem vom Filter kommenden Signal in Form einer Sinuswelle hinzufügt, wobei die Vorrichtung zum Wiederherstellen der Gegenwart mit Hilfe der Vergangenheit (15) an einer oder mehreren Stufen des ersten wiederherzustellenden, zu einem Zeitpunkt t empfangenen Signals einen sinusförmigen Teil des durch Verzögerung τ verzögerten Signals des Sinustyps ersetzt, wobei der sinusförmige Ersatzteil eine Zeitdauer hat, die im Wesentlichen gleich dem Wert T der ersetzten Stufe ist.

5. Vorrichtung nach Anspruch 4, **dadurch gekennzeichnet, dass** sie Folgendes umfasst: zwei Filter, jeweils ein Tiefpassfilter (16) mit einer ersten Frequenz F₁ und ein Bandpassfilter (17) mit einer zweiten Frequenz F₂, eine erste Vorrichtung (21) zum Berechnen des Mittelwertes VmF₁ des Signals von dem ersten Tiefpassfilter und eine zweite Vorrichtung (23) zum Berechnen des Mittelwertes VmF₂ des zweiten Signals von dem Bandpassfilter, eine erste (22) und eine zweite (24) Vorrichtung zum Erkennen eines Knickpunkts (VF₁, VF₂), der die Mittelwerte der beiden wiederhergestellten Signale empfängt, und eine Vorrichtung (14) zum Berechnen des Peilwinkels von den beiden wiederhergestellten Signalen und von einem digitalen Akkumulationsoszillator (13) stammenden Referenzen, wobei der digitale Oszillator auf einem Prinzip des Koppelns der internen Referenzen der Vorrichtung mit den externen Referenzen basiert.

6. Vorrichtung nach Anspruch 4 oder 5, **dadurch gekennzeichnet, dass** die Erkennungsvorrichtung ein TACAN-Impulsdetektor ist, der mit einer Vorrichtung zum Decodieren von Paaren und einer Vorrichtung zum Decodieren von Referenzen verbunden ist, und **dadurch**, dass das erste Filter ein Tiefpassfilter mit 15 Hz und das zweite Filter ein Bandpassfilter mit einer Frequenz von 135 Hz ist.
